Europäisches Patentamt

European Patent Office

Office européen des brevets

(19)

(11) Veröffentlichungsnummer: **0 141 125**
**B1**

(12) **EUROPÄISCHE PATENTSCHRIFT**

(45) Veröffentlichungstag der Patentschrift: **01.08.90**

(51) Int. Cl.⁵: **C 01 B 33/02**

(21) Anmeldenummer: **84110217.1**

(22) Anmeldetag: **28.08.84**

(54) **Verfahren zum Behandeln von Silicium und Ferrosilicium mit Schlacke.**

(30) Priorität: **29.08.83 DE 3331046**

(43) Veröffentlichungstag der Anmeldung:
**15.05.85 Patentblatt 85/20**

(45) Bekanntmachung des Hinweises auf die
Patenterteilung:
**01.08.90 Patentblatt 90/31**

(84) Benannte Vertragsstaaten:
**CH DE FR LI SE**

(56) Entgegenhaltungen:
**EP-A-0 018 633**
**DE-B-2 706 175**
**FR-A-2 519 961**
**US-A-4 290 809**

(73) Patentinhaber: **WACKER-CHEMIE GMBH**
**Prinzregentenstrasse 22**
**D-8000 München 22 (DE)**

(72) Erfinder: **More, Anton, Dr. Dipl.-Chem.**
**Marienberger Strasse 48 c**
**D-8263 Burghausen (DE)**
Erfinder: **Lang, Winfried, Dr. Dipl.-Chem.**
**Oberkriebach 66**
**A-5122 Ach (AT)**
Erfinder: **Riedle, Rudolf, Dr. Dipl.-Chem.**
**Lindenweg 29**
**D-8263 Burghausen (DE)**
Erfinder: **Straussberger, Herbert**
**Herzogstrasse 12**
**D-8261 Mehring-Öd (DE)**
Erfinder: **Streckel, Willi**
**Neuhauserstrasse 8**
**D-8261 Mehring-Öd (DE)**

Courier Press, Leamington Spa, England.

**Beschreibung**

Die Erfindung betrifft ein Verfahren zum Behandeln von elementarem Silicium und Ferrosilicium mit Schlacke, wobei die Schlacke im schmelzflüssigen Zustand vorliegt.

Es ist aus DE—OS 27 06 175 bekannt, Silicium in eine Schlacke einzubringen, die neben 2 bis 30 Gew.-% Calciumoxid, 5 bis 35 Gew.-% Magnesiumoxid, 0,5 bis 28 Gew.-% Aluminiumoxid und 45 bis 70 Gew.-% Siliciumoxid mindestens, bezogen auf die zu behandelnde Siliciummenge, 0,29 Gew.-% Kupfer enthält. Nach diesem Verfahren konnte Siliciumfeinstaub, der beim Vermahlen stückigen Siliciums anfällt, wiedergewonnen werden. Nachteiligerweise konnte das auf diese Art gewonnene Silicium nicht als Rohmaterial auf dem Halbleitersektor eingesetzt werden, da bei diesem Verwendungszweck selbst einige Hundertstel Prozente von Kupfer im Silicium abträglich sind.

Aufgabe der Erfindung war es, ein Verfahren zum Behandeln von Silicium und Ferrosilicium zu finden, das bei Wahrung der Vorteile des gemäß 27 06 175 bekannten Verfahrens die vorstehend geschilderten Nachteile vermeidet. Insbesondere war es Aufgabe der Erfindung, eine Schlackenzusammensetzung aufzufinden, bei der auch feinteiliges Silicium oder Ferrosilicium als zusammenhängende flüssige Phase erhalten werden kann, die sich unterhalb der Schlackenoberfläche sammelt, die keinen Zusatz an Kupfer aufweist und gleichwohl einen ruhigen, ohne Turbulenzen verlaufenden Schmelzvorgang gewährleistet.

Es wurde nun gefunden, daß auf den Zusatz von Kupfer verzichtet werden kann, wenn eine Schlacke der nachfolgend aufgeführten Zusammensetzung einen Gehalt an $K_2O$ (analytisch) aufweist.

Gegenstand der Erfindung ist ein Verfahren zum Behandeln von Silicium oder Ferrosilicium durch eine mittels elektrischer Widerstandsheizung verflüssigten bzw. in schmelzflüssigem Zustand gehaltenen Schlacke, wobei Silicium oder Ferrosilicium in eine zusammenhängende flüssige Phase überführt wird, das dadurch gekennzeichnet ist, daß Silicium oder Ferrosilicium mit einer Schlacke in Kontakt gebracht wird, die folgende analytische Zusammensetzung aufweist:

| | |
|---|---|
| $K_2O$ | 2 bis 13 Gew.-% |
| $Na_2O$ | 0 bis 2 Gew.-% |
| $\sum K_2O + Na_2O$ | 2 bis 13 Gew.-% |
| $SiO_2$ | 45 bis 72 Gew.-% |
| $Al_2O_3$ | 0 bis 30 Gew.-% |
| $\sum SiO_2 + Al_2O_3$ | 60 bis 78 Gew.-% |
| $CaO$ | 0 bis 30 Gew.-% |
| $MgO$ | 0 bis 30 Gew.-% |
| $\sum CaO + MgO$ | 15 bis 30 Gew.-% |
| $CaF_2$ | 0 bis 10 Gew.-% |
| $MgF_2$ | 0 bis 10 Gew.-% |
| $\sum CaF_2 + MgF_2$ | 0 bis 10 Gew.-% |
| $\sum CaO + MgO + CaF_2 + MgF_2$ | 15 bis 30 Gew.-% |

sowie rohstoffbedingte Verunreinigungen

Die vorstehend genannten Summenangaben sind Maßgaben, welche die freie Wahl der Einzelkomponenten einschränken. Der Anteil an rohstoffbedingten Verunreinigungen liegt in der Regel im Bereich von 0,1 bis 1,5 Gew.-%. Alle Gew.-%-Angaben ergänzen sich bei jeder speziellen Schlackenzusammensetzung zu 100 Gew.-%.

Zum Einschmelzen feinteiligen Siliciums mit mehr als 97% Silicium wird folgende Schlackenzusammensetzung bevorzugt:

| | |
|---|---|
| $K_2O$ | 4 bis 10 Gew.-% |
| $Na_2O$ | 0 bis 2 Gew.-% |
| $\sum K_2O + Na_2O$ | 4 bis 10 Gew.-% |
| $SiO_2$ | 62 bis 72 Gew.-% |
| $Al_2O_3$ | 2 bis 10 Gew.-% |

$$\sum SiO_2 + Al_2O_3 \qquad\qquad 64 \text{ bis } 78 \text{ Gew.-\%}$$

$$CaO \qquad\qquad\qquad\qquad 2 \text{ bis } 25 \text{ Gew.-\%}$$

$$MgO \qquad\qquad\qquad\qquad 2 \text{ bis } 25 \text{ Gew.-\%}$$

$$\sum CaO + MgO \qquad\qquad 16 \text{ bis } 27 \text{ Gew.-\%}$$

$$CaF_2 \qquad\qquad\qquad\qquad 0 \text{ bis } 5 \text{ Gew.-\%}$$

$$MgF_2 \qquad\qquad\qquad\qquad 0 \text{ bis } 5 \text{ Gew.-\%}$$

$$\sum CaF_2 + MgF_2 \qquad\qquad 0 \text{ bis } 5 \text{ Gew.-\%}$$

$$\sum CaO + MgO + CaF_2 + MgF_2 \quad 16 \text{ bis } 27 \text{ Gew.-\%}$$

sowie rohstoffbedingte Verunreinigungen.

Die erfindungsgemäßen Schlacken können vor ihrem Einsatz im erfindungsgemäßen Verfahren sowohl als Gemische ihrer Einzelkomponenten als auch als vorgeschmolzene Pulver vorliegen.

Als Ferrosilicium wird insbesondere solches mit einem Eisengehalt von 10 bis 25 Gew.-% eingesetzt. Silicium weist insbesondere einen Reinheitsgehalt von mindestens 97 Gew.-% auf.

Die Behandlung des Siliciums oder Ferrosiliciums erfolgt nach an sich bekannten Methoden. Beispielsweise kann stückiges oder feinteiliges Silicium oder Ferrosilicium, einschließlich Silicium- oder Ferrosiliciumfeinststaub mit Korngrößen unter 50 μm in die schmelzflüssige erfindungsgemäße Schlacke eingebracht werden. Das stückige oder feinteilige Silicium bzw. Ferrosilicium wird nach dem Eintrag in die Schlacke in den schmelzflüssigen Zustand übergeführt, wobei sich ein flüssiges Zwei-Phasen-System bildet mit einer Unterschicht aus schmelzflüssigem Silicium oder Ferrosilicium, auf der die Schlackenschmelze schwimmt.

Das Verhältnis von Schlackenmenge zur Menge des einzuschmelzenden Siliciums oder Ferrosiliciums beträgt zweckmäßigerweise 0,7 bis 1,7 : 1 Gewichtsteile.

Als Vorrichtung zur Durchführung des Verfahrens werden vorzugsweise elektrische Widerstandsöfen verwendet mit gestampfter Kohleauskleidung und einer oder mehreren Graphitelektroden. Die Graphitelektroden tauchen dabei in die Schlacke ein. Die auf diese Art widerstandsbeheizte Schlacke wird oberhalb der Schmelztemperatur von Silicium oder Ferrosilicium gehalten. Typischerweise liegt die Temperatur bei 1500 bis 1800°C, insbesondere 1600 bis 1700°C.

Überraschenderweise besitzt die erfindungsgemäße Schlacke auch ohne Kupferzusatz keine Emulgiereigenschaften gegenüber Silicium oder Ferrosilicium. Dadurch wird verhindert, daß sich innerhalb der Schlacke ein höherer Silicium- oder Ferrosiliciumgehalt aufbaut, der zu Kurzschlüssen im Widerstandsbeheizungssystem führen würde.

Durch die beschriebene Schlackenbehandlung kann beispielsweise Siliciumfeinststaub, der als Abfallprodukt beim Vermahlen stückigen Siliciums auf eine staubarme Körnung anfällt, als stückiges Produkt zurückgewonnen werden. Darüberhinaus wird durch die erfindungsgemäße Schlackenbehandlung ein Reinigungseffekt erzielt, der sich insbesondere auf den an sich unerwünschten Gehalt an Calcium und Aluminium im Silicium oder Ferrosilicium bezieht.

Es liegt weiterhin im Rahmen der Erfindung, schmelzflüssiges Silicium oder Ferrosilicium, wie es beispielsweise als Abstich aus einem Reduktionsofen anfällt, mit erfindungsgemäßer Schlacke zu behandeln. Zur Durchführung dieser Verfahrensvariante wird beispielsweise schmelzflüssiges Silicium oder Ferrosilicium aus einem Reduktionsofen in einem Ofen abgestochen, wie er oben beschrieben wurde. In diesem Ofen befindet sich die Schlacke der erfindungsgemäßen Zusammensetzung, welche mittels elektrische Widerstandserhitzung erschmolzen und warmgehalten wurde. Das flüssige Silicium der Ferrosilicium sammelt sich nach dem Eingießen in den beschriebenen Ofen unterhalb der Schlackenschicht und wird durch Reaktion mit der Schlacke von den Verunreinigungen Aluminium und Calcium befreit. Anschließen wird das Silicium oder Ferrosilicium in eine vorgeheizte Pfanne abgestochen und auf Masseln oder Platten vergossen.

Eine andere Verfahrensvariante besteht darin, daß das schmelzflüssige Silicium oder Ferrosilicium aus dem Reduktionsofen in eine vorgeheizte Pfanne abgestochen und anschließend mit erfindungsgemäßer Schlacke bedeckt wird. Die Schlacke geht dabei in den schmelzflüssigen Zustand über und bildet eine zusammenhängende Schutzschicht über dem flüssigen Silicium- oder Ferrosiliciumabtich. Die erforderlichen Temperaturen zum Flüssighalten des Systems werden durch Widerstandsbeheizung der Schlacke aufrechterhalten. Bei diesen Behandlungsmethoden wird ebenfalls der bereits oben beschriebene Reinigungseffekt erzielt.

Bei den letztgenannten Verfahrensvarianten wird zweckmäßigerweise ein Verhältnis von Schlackenmenge zur Menge des behandelten Siliciums und Ferrosilicium von 0,05 bis 0,3 : 1 Gewichtsteilen angewendet.

Die erfindungsgemäßen Schlacken besitzen weiterhin gegenüber den gemäß DE—AS 27 06 175 bekannten Schlacken den Vorteil höherer Standzeiten. Während die vorbekannten Schlacken bis zu 20 mal wiederverwendet werden konnten, ist es mit den erfindungsgemäßen Schlacken möglich, bis zu 35 Abstiche durchzuführen. Es wird ferner überraschenderweise eine Ausbeuteerhöhung von durchschnittlich 90 Gew.-% an eingesetztem feinteiligem Silicium nach dem obengenannten vorbekannten Verfahren auf durchschnittlich 93 Gew.-% mit dem erfindungsgemäßen Verfahren erzielt.

Die Erfindung wird nun anhand von Beispielen näher erläutert:

Beispiele 1 bis 9

Jeweils 3,5 t der in der nachfolgenden Tabelle 1 bezeichneten Schlacken wurden in einem elektrischen Widerstandsofen mit gestampfter Kohleauskleidung und Graphitelektroden eingeschmolzen. Danach wurden 2,7 t staubförmiges Silicium in die Schmelze eingebracht. Es wurde ein ruhiger Ofengang beobachtet, ohne daß Schlacke oder Silicium aus der Schmelze ausgeworfen wurde. Nach 5 Stunden waren alle festen Bestandteile durchgeschmolzen. Die Temperatur der Schmelze betrug 1650°C. Schließlich wurde die zusammengeflossene Siliciumschmelze abgestochen. Die Ausbeuten sowie die Reinigungswirkung sind der nachfolgenden Tabelle zu entnehmen.

Tabelle 1

| Bei-spiel | Zusammensetzung der verwendeten Schlacke plus rohstoffbedingte Verunreinigungen | | | | | | | Analysenwerte des Siliciums plus rohstoffbedingte Verunreinigungen | | | | | | Aus-beute in % |
| | | | | | | | | vor dem Schmelzen | | | nach dem Schmelzen | | | |
| | $SiO_2$ | $Al_2O_3$ | CaO | MgO | $K_2O$ | $Na_2O$ | $CaF_2$ | Fe | Al | Ca | Fe | Al | Ca | |
| 1 | 67,1 | 3,1 | 2,8 | 20,2 | 5,2 | 1,2 | – | 0,45 | 0,56 | 0,13 | 0,47 | 0,04 | 0,01 | 93,2 |
| 2 | 65,2 | 5,3 | 3,5 | 15,5 | 8,1 | 1,5 | – | 0,64 | 0,50 | 0,11 | 0,67 | 0,05 | 0,01 | 92,5 |
| 3 | 71,5 | 5,2 | 3,3 | 13,5 | 3,9 | 1,4 | – | 0,52 | 0,41 | 0,10 | 0,55 | 0,05 | 0,01 | 91,8 |
| 4 | 64,3 | 9,6 | 6,2 | 14,1 | 4,8 | 0,2 | – | 0,50 | 0,65 | 0,19 | 0,55 | 0,13 | 0,04 | 94,2 |
| 5 | 66,0 | 3,7 | 13,3 | 11,4 | 3,7 | 0,5 | – | 0,46 | 0,45 | 0,12 | 0,63 | 0,06 | 0,06 | 93,6 |
| 6 | 69,3 | 6,3 | 9,8 | 7,7 | 5,5 | 0,9 | – | 0,43 | 0,52 | 0,20 | 0,51 | 0,05 | 0,03 | 94,4 |
| 7 | 62,8 | 6,9 | 21,7 | 2,2 | 5,3 | 0,1 | – | 0,83 | 0,45 | 0,14 | 0,85 | 0,05 | 0,09 | 91,5 |
| 8 | 70,3 | 6,8 | 2,6 | 7,6 | 4,3 | 0,7 | 6,9 | 1,04 | 0,82 | 0,11 | 1,07 | 0,04 | 0,05 | 92,7 |
| 9 * | 67,8 | 4,3 | 6,8 | 9,3 | 6,2 | 0,4 | – | 1,20 | 0,59 | 0,13 | 1,26 | 0,06 | 0,01 | 93,5 |

* Die gemäß Beispiel 9 verwendete Schlacke weist zusätzlich zu den oben angegebenen Komponenten noch 4,2 Gew.-% $MgF_2$ auf.

EP 0 141 125 B1

Beispiele 10 bis 15

Die Arbeitsweise gemäß den Beispielen 1 bis 9 wurde wiederholt, mit der Abänderung, daß anstatt elementarem Silicium Ferrosilicium eingesetzt wurde.

Die Ergebnisse sind der nachfolgenden Tabelle 2 zu entnehmen.

Tabelle 2

| Bei-spiel | Zusammensetzung der verwendeten Schlacke plus rohstoffbedingte Verunreinigungen | | | | | | | Analysenwerte des Fe Si plus rohstoffbedingte Verunreinigungen | | | | | |
| | | | | | | | | vor dem Schmelzen | | | nach dem Schmelzen | | |
| | $SiO_2$ | $Al_2O_3$ | CaO | MgO | $K_2O$ | $Na_2O$ | $CaF_2$ | Fe | Al | Ca | Fe | Al | Ca |
|---|---|---|---|---|---|---|---|---|---|---|---|---|---|
| 10 | 68,2 | 2,5 | 15,7 | 10,5 | 2,2 | 0,5 | – | 21,2 | 1,42 | 1,74 | 21,8 | 0,54 | 0,27 |
| 11 | 64,0 | 7,7 | 17,5 | 8,0 | 2,4 | 0,1 | – | 21,76 | 4,71 | 1,24 | 23,12 | 0,91 | 0,19 |
| 12 | 53,9 | 17,3 | 18,1 | 6,4 | 2,9 | 0,2 | – | 22,71 | 4,17 | 1,56 | 22,99 | 0,92 | 0,32 |
| 13 | 45,4 | 24,4 | 20,7 | 5,3 | 2,2 | 0,6 | – | 24,53 | 5,15 | 1,20 | 25,34 | 1,74 | 0,30 |
| 14 | 46,1 | 28,1 | 18,3 | 3,8 | 2,1 | 0,1 | – | 20,83 | 4,28 | 1,74 | 22,62 | 1,59 | 0,36 |
| 15 | 62,5 | 10,8 | 10,1 | 7,3 | 2,5 | 0,3 | 5,2 | 21,61 | 1,41 | 1,76 | 22,03 | 0,33 | 0,21 |

EP 0 141 125 B1

# EP 0 141 125 B1

**Patentanspruch**

Verfahren zum Behandeln von Silicium oder Ferrosilicium durch eine mittels elektrischer Widerstandsheizung verflüssigten bzw. in schmelzflüssigem Zustand gehalten Schlacke, wobei Silicium oder Ferrosilicium im.eine zusammenhängende flüssige Phase überführt wird, dadurch gekennzeichnet, daß Silicium oder Ferrosilicium mit einer Schlacke in Kontakt gebracht wird, die folgende analytische Zusammensetzung aufweist:

| | |
|---|---|
| $K_2O$ | 2 bis 13 Gew.-% |
| $Na_2O$ | 0 bis 2 Gew.-% |
| $\Sigma\ K_2O + Na_2O$ | 2 bis 13 Gew.-% |
| $SiO_2$ | 45 bis 72 Gew.-% |
| $Al_2O_3$ | 0 bis 30 Gew.-% |
| $\Sigma\ SiO_2 + Al_2O_3$ | 60 bis 78 Gew.-% |
| $CaO$ | 0 bis 30 Gew.-% |
| $MgO$ | 0 bis 30 Gew.-% |
| $\Sigma\ CaO + MgO$ | 15 bis 30 Gew.-% |
| $CaF_2$ | 0 bis 10 Gew.-% |
| $MgF_2$ | 0 bis 10 Gew.-% |
| $\Sigma\ CaF_2 + MgF_2$ | 0 bis 10 Gew.-% |
| $\Sigma\ CaO + MgO + CaF_2 + MgF_2$ | 15 bis 30 Gew.-% |

sowie rohstoffbedingte Verunreinigungen.

**Revendication**

Procédé pour le traitement du silicium ou du ferrosilicium, à l'aide d'une scorie, liquéfiée ou maintenue en fusion à l'aide d'un chauffage par résistance électrique, le silicium ou le ferro-silicium étant convertis en une phase liquide continue, caractérisé en ce que le silicium ou le ferro-silicium est mis en contact avec une scorie ayant la composition analytique suivante:

| | |
|---|---|
| $K_2O$ | 2 à 13 % en poids |
| $Na_2O$ | 0 à 2 % en poids |
| $\Sigma\ K_2O + Na_2O$ | 2 à 13 % en poids |
| $SiO_2$ | 45 à 72 % en poids |
| $Al_2O_3$ | 0 à 30 % en poids |
| $\Sigma\ SiO_2 + Al_2O_3$ | 60 à 78 % en poids |
| $CaO$ | 0 à 30 % en poids |
| $MgO$ | 0 à 30 % en poids |
| $\Sigma\ CaO + MgO$ | 15 à 30 % en poids |
| $CaF_2$ | 0 à 10 % en poids |
| $MgF_2$ | 0 à 10 % en poids |
| $\Sigma\ CaF_2 + MgF_2$ | 0 à 10 % en poids |
| $\Sigma\ CaO + MgO + CaF_2 + MgF_2$ | 15 à 30 % en poids |

et les impuretés dues aux matières premières.

# EP 0 141 125 B1

**Claim**

Process for treating silicon or ferrosilicon with a slag that is liquefied or kept in a molten state by means of electrical resistance heating, with the silicon or ferrosilicon being converted into a continuous liquid phase, characterised in that silicon or ferrosilicon is brought into contact with a slag having the following analytical composition:

| | |
|---|---|
| $K_2O$ | from 2 to 13 % by weight |
| $Na_2O$ | from 0 to 2 % by weight |
| $\Sigma\ K_2O + Na_2O$ | from 2 to 13 % by weight |
| $SiO_2$ | from 45 to 72 % by weight |
| $Al_2O_3$ | from 0 to 30 % by weight |
| $\Sigma\ SiO_2 + Al_2O_3$ | from 60 to 78 % by weight |
| $CaO$ | from 0 to 30 % by weight |
| $MgO$ | from 0 to 30 % by weight |
| $\Sigma\ CaO + MgO$ | from 15 to 30 % by weight |
| $CaF_2$ | from 0 to 10 % by weight |
| $MgF_2$ | from 0 to 10 % by weight |
| $\Sigma\ CaF_2 + MgF_2$ | from 0 to 10 % by weight |
| $\Sigma\ CaO + MgO + CaF_2 + MgF_2$ | from 15 to 30 % by weight |

and impurities resulting from the raw materials.

9